# EUROPÄISCHE PATENTANMELDUNG

(11) **EP 0 638 881 A1**
(43) Veröffentlichungstag der Anmeldung: **15.02.1995**
(21) Anmeldenummer: 94111090.0
(22) Anmeldetag: 16.07.1994
(51) Int. Cl.: G07F 17/10, G07F 7/00, G07B 15/04

(54) **Zweiradgarage**

(30) Priorität: 06.08.1993 DE 4326405
(71) Anmelder: Bike-Box Fahrradgaragen GmbH, D-42579 Heiligenhaus (DE)
(72) Erfinder: Leineweber, Bernard, D-42579 Heiligenhaus (DE); Reckeweg, Horst, D-42579 Heiligenhaus (DE); Thywissen, Cornelius, D-50129 Bergheim-Niederaussem (DE); Ferling, Klaus Dipl.-Ing., D-42579 Heiligenhaus (DE)
(74) Vertreter: COHAUSZ HASE DAWIDOWICZ & PARTNER

(57) **Zusammenfassung**

Die Erfindung betrifft eine Zweiradgarage mit einem für ein oder mehrere Zweiräder allseits umschlossenen Raum, der eine Tür mit einem Schloß aufweist, durch die ein Zweirad einstell- und entnehmbar ist, wobei das Schloß als Kartenleseschloß für eine Magnet- oder Chipkarte ausgebildet oder mit einem derartigen Kartenleser verbunden ist und daß das Schloß mit einem Datenerfassungssystem verbunden ist und die Tür nur bei eingegebener Magnet- oder Chipkarte durch Berechtigte zu öffnen ist. Sowohl bei leerer Zweiradgarage als auch bei belegter Zweiradgarage ist die Tür ständig verschlossen.

## Beschreibung

Die Erfindung betrifft eine Zweiradgarage mit den Merkmalen des Oberbegriffs des Anspruchs 1.

Aus der DE 91 02 073.5 U1 ist eine verschließbare Unterstellmöglichkeit für Zweiräder bekannt, bei der eine Zweiradgarage über Schlüssel oder Codekarten verschließbar ist.

Außerdem ist aus der DE 29 38 398 A1 eine Gepäckaufbewahrungsanlage mit Schließfächern bekannt, deren Türen nach Münzeinwurf verschließbar sind. Diesen Schlössern mit Münzeinwurf ist ein Zeiterfassungssystem zugeordnet, bei dem Überschreiten einer bestimmten Belegungszeit die Tür nur durch Nachzahlen eines entsprechenden Betrages freigegeben wird.

Bei den bekannten Systemen, bei der Zweiradgarage, aber auch bei dem Gepäckaufbewahrungssystem mit Zeiterfassung, treten die folgenden Probleme auf.

Die Türen der bekannten Behältnisse sind offen, wenn die Zweiradgarage oder das Schließfach nicht belegt ist. Deshalb kann eine zweckentfremdete Nutzung nicht ausgeschlossen werden. Es ist dann möglich, die Behältnisse mit Abfall oder Unrat von innen zu verschmutzen, es kann aber auch geradezu dazu einladen, in der Zweiradgarage zu übernachten.

Alternativ wäre denkbar, daß die Zweiradgarage jeweils über einen längeren Zeitraum einer bestimmten Person zugeordnet ist, die dann einzig einen Schlüssel für die Zweiradgarage besitzt und diese ständig verschlossen hält. In diesem Fall ist aber eine flexible Nutzung der Zweiradgarage im Sinne eines Kurzzeitparkplatzes für verschiedene Nutzer mit Beschädigungs- und Diebstahlsicherung nicht erreicht.

Wenn ein münzbetätigtes Schloßsystem entsprechend der bekannten Gepäckaufbewahrungsanlage vorgesehen ist, befindet sich Geld an oder in der Nahe der Behältnisse, was wiederum dazu führt, daß die Schlösser beschädigt und ausgeraubt werden. Außerdem ist zur Wartung bzw. zur Entleerung der münzbetätigten Schlösser Dienstpersonal erforderlich.

Es ist nun Aufgabe der vorliegenden Erfindung, eine Zweiradgarage zu schaffen, bei der die Tür der Zweiradgarage auch im nicht belegten Zustand für Unbefugte nicht zu öffnen ist und bei der außerdem kein Bargeld im Bereich der Zweiradgarage vorhanden ist.

Es ist außerdem Aufgabe der Erfindung, ein Verfahren zur Steuerung der Schloßsysteme derartiger Zweiradgaragen zu schaffen.

Diese Aufgaben werden durch eine Zweiradgarage mit den Merkmalen des Anspruchs 1 sowie durch ein Verfahren mit den Merkmalen des Anspruchs 2 gelöst.

Weil das Schloß als Kartenleseschloß für eine Magnet- oder Chipkarte ausgebildet ist oder mit einem derartigen Kartenleser verbunden ist, das Schloß mit einem zentralen oder dezentralen Datenerfassungssystem verbunden ist und weil die Tür nur bei eingegebener Magnet- oder Chipkarte zu öffnen ist, wird die Tür der Zweiradgarage nur von autorisierten Personen zu öffnen sein, d.h. von Personen, die im Besitz einer entsprechenden Magnet- oder Chipkarte sind.

Mit dem erfindungsgemäßen Verfahren zum Verwalten einer oder mehrerer Zweiradgaragen gemaß Anspruch 4 ist es möglich, den Zugang zu den Zweiradgaragen auf den autorisierten Personenkreis, der im Besitz einer Magnet- oder Chipkarte ist, zu beschränken. Es ist außerdem möglich, eine oder mehrere Zweiradgaragen so zu verwalten, daß mehreren oder einer Vielzahl von Benutzern die Nutzung einer beliebigen, dem Verwaltungssystem angeschlossenen Zweiradgarage möglich ist, ohne daß in der ungenutzten Zeit die Zweiradgarage offen steht oder von beliebigen Personen geöffnet werden kann. Außerdem ist in den Schlössern der erfindungsgemäßen Zweiradgaragen bzw. der nach dem erfindungsgemäßen Verfahren verwalteten Zweiradgaragen keinerlei Bargeld vorhanden oder erforderlich.

Zum Entnehmen des eingestellten Zweirades kann die Tür nur mit der zur Belegung verwendeten Magnet- oder Chipkarte oder mit einer Generalkarte geöffnet werden.

Im folgenden wird ein Ausführungsbeispiel der Erfindung beschrieben.

Die erfindungsgemäße Zweiradgarage mit einem Kartenleseschloß für Magnet- oder Chipkarten weist einen allseits umschlossenen Einstellraum für ein oder mehrere Zweiräder auf. In diesem Einstellraum ist das Zweirad vollständig umschlossen, d.h. es ist gegen Diebstahl oder Beschädigung gesichert.

Die Zugangstür, die das Einstellen und Entnehmen des Zweirades ermöglicht, wird von einem Schloß ver- und entriegelt.

Das Schloß zur Verriegelung der Zugangstür ist mit einem Datenerfassungsgerät verbunden, beispielsweise einem Mikroprozessor oder Mikrocontroler mit einem zugeordneten Speicher. Es kommen für die Organisation der Datenerfassungssysteme drei Ausführungsbeispiele in Betracht. So kann zum einen jeder Zweiradgarage ein eigenes Datenerfassungssystem zugeordnet werden, bei dem die eingegebene Magnet- oder Chipkarte selbständig überprüft wird und die Daten auf der Chipkarte und in dem Datenerfassungssystem abgeglichen und gespeichert werden. Die in dem einzelnen Datenerfassungssystem vorhandenen Daten über die benutzte Magnetkarte und den verstrichenen Zeitraum sind dabei derart zu speichern, daß auch im Falle eines Stromausfalls die Daten nicht verloren gehen. Eine derartige Zweiradgarage ist bis auf die erforderliche Stromversorgung vollkommen autark. Außerdem ist bei einem solchen System der Kartenleser direkt bei der gewünschten Zweiradgarage angeordnet.

Eine andere Ausführungsform sieht vor, daß Zweiradgaragen in Gruppen von zwei oder mehreren Einheiten zusammengefaßt sind und über eine gemeinsame, aber in der Nähe der Zweiradgaragen vorgesehene Datenerfassungsanlage betrieben werden. Hierbei kann entweder ein zentraler Kartenleser vorgesehen werden, der mit allen Zweiradgaragen in Verbindung steht und nach Eingabe der Magnetkarte eine wählbare Zweiradgarage freigibt. Es kann aber auch bei jeder einzelnen Zweiradgarage ein Schloß und ein Kartenleser vorgesehen sein, wobei lediglich die Verwaltung der betreffenden Daten in einem den Zweiradgaragen gemeinsamen Datenerfassungssystem erfolgt. Bei dieser Ausführungsform sind Datenleitungen oder drahtlose Datenübertragung erforderlich, die die Zweiradgaragen mit dem Datenerfassungssystem verbinden.

Letztlich können sämtliche Zweiradgaragen eines Betreibers an einem einzigen Datenverarbeitungssystem angeschlossen sein, wobei jedoch unerwünscht hohe Kosten für die datenmäßige Vernetzung der Zweiradgaragen entstehen. Die erstgenannte Ausführungsform der dezentral verwalteten, autarken Zweiradgaragen wird derzeit bevorzugt. Vorteilhaft ist dabei auch, daß an einer bestimmten Stelle eine Anzahl von Zweiradgaragen aufgestellt werden kann und später, wenn sich eine gewisse Nachfrage nach den Zweiradgaragen einstellt, einzelne Garagen entfernt oder hinzugefügt werden können, ohne daß diese an ein gemeinsames Datenerfassungssystem angeschlossen werden müssen. Insoweit ist eine sehr flexible Anpassung des Angebots an Fahrradgaragen an den tatsächlichen Bedarf möglich.

Zur Nutzung der Zweiradgarage sind nur die autorisierten Personen berechtigt. An diese Personen werden Magnet- oder Chipkarten ausgegeben, auf denen eine Identifizierungsnummer gespeichert ist. Auf der Karte wird zudem das Konto geführt. Auf dem Konto ist ein bestimmter Betrag gutgeschrieben, der in Abhängigkeit von der Nutzungsdauer der Zweiradgarage abgebucht werden kann.

Bei der Benutzung der Zweiradgarage wird wie folgt vorgegangen:
Ein potentieller Benutzer einer Zweiradgarage entrichtet bei dem Betreiber der Zweiradgaragen oder über eine Verkaufsstelle einen bestimmten Geldbetrag und erhält dafür eine Magnetkarte oder eine Chipkarte mit einer zugeordneten Identifizierungsnummer.

Wenn der Benutzer eine leere, verschlossene Zweiradgarage benutzen möchte, so führt er in den der Zweiradgarage zugeordneten Kartenleser seine persönliche Karte ein. Der Kartenleser prüft nun, selbständig anhand einer Codierung oder aber in Verbindung mit einem zentralen Datenbanksystem, ob der Benutzer berechtigt ist, die Zweiradgarage zu benutzen.

Wenn dem so ist, öffnet das dem Kartenleser zugeordnete Schloß die Tür für die Zweiradgarage. Der Benutzer kann nunmehr sein Zweirad in die Garage einstellen und die Tür verschließen. Sodann verriegelt das Schloß die Zugangstür und sichert dadurch das eingestellte Zweirad gegen Beschädigung oder Diebstahl. Schließlich besteht für das eingestellte Zweirad auch ein Witterungsschutz.

Danach wird die Magnet- oder Chipkarte wieder ausgegeben und verbleibt beim Benutzer. Auf der Chipkarte oder im zentralen Datenerfassungssystem wird die Garagennummer sowie der Zeitpunkt der Benutzungsaufnahme notiert.

Wenn der Benutzer das Zweirad wieder aus der Zweiradgarage entnehmen möchte, gibt er erneut seine Magnet- oder Chipkarte in den Kartenleser ein, der dem Schloß der Zweiradgarage zugeordnet ist. Es wird zunächst festgestellt, ob die Karte mit derjenigen Karte identisch ist, die zum Einstellen des Zweirades eingegeben wurde. Wenn dies der Fall ist, wird der seit dem Einstellen vergangene Zeitraum errechnet und ein entsprechender Betrag von dem der Karte zugeordneten Benutzerkonto abgebucht. Wenn das Konto die erforderliche Deckung aufweist, wird die Zugangstür freigegeben. Der Benutzer kann die Tür öffnen, sein Zweirad entnehmen, die Tür wird entweder manuell oder automatisch wieder geschlossen und danach die benutzerspezifische Karte ausgegeben, so daß der Karteninhaber bei einer beliebigen anderen Zweiradgarage erneut sein Zweirad einstellen kann.

Die Tür ist durch diese Vorrichtung und dieses Verwaltungsverfahren zu keiner Zeit für unberechtigte Personen zu öffnen. Es befindet sich auch kein Bargeld in der Nähe des Schlosses oder im Schloß. Deshalb ist es nicht möglich, daß die Zweiradgarage von unbefugten Personen als Schlafstätte benutzt oder zu Zwecken der Abfallagerung oder sonstigen Verschmutzung mißbraucht wird. Außerdem ist kein Anreiz zum Beschädigen oder Ausrauben der Schlösser gegeben.

Wenn bei eingestelltem Zweirad die Magnet- oder Chipkarte des Benutzers keine für den vergangenen Einstellzeitraum ausreichende Deckung aufweist, ist es zunächst nicht möglich, die Tür zu öffnen.

Es ist dann vorgesehen, daß der Benutzer entweder bei der Verwaltung gegen Zahlung eines neuerlichen Betrages seine Karte "aufladen" läßt, d.h. seinem Konto einen gewissen Geldbetrag zuführt, oder daß der Benutzer mit einer unmittelbar nach der ersten Karte eingeführten weiteren Karte die Tür öffnen kann, wobei der Fehlbetrag von dem Konto der zweiten Karte abgebucht wird.

Durch diese Verfahrensweise ist eine lückenlose Kontrolle über die Zweiradgaragen möglich, ohne daß Fehlbeträge entstehen.

Durch das bargeldlose und benutzerorientierte Verfahren zur Verwaltung der Zweiradgaragen kann die Handhabung des erfindungsgemäßen Verfahrens außerordentlich flexibel gestaltet werden.

So können beispielsweise die Karten für einen bestimmten räumlich begrenzten Bereich, beispielsweise ein Stadtgebiet, gültig sein, oder aber für das ganze Netz von Zweiradgaragen freigegeben werden.

Das Konto kann auf der Karte selbst geführt werden oder aber in einer zentralen Datenverarbeitung. Es ist außerdem denkbar, daß Großkunden, beispielsweise Unternehmen ihren Angestellten oder Mitgliedern die zur Nutzung der Zweiradgaragen nötigen Karten zur Verfügung stellen und die Nutzung der Zweiradgaragen für den einzelnen Benutzer unentgeldlich ist, weil die zentrale Organisation, beispielsweise der Arbeitgeber oder ein Verein die anfallenden Kosten übernimmt.

Auf diese Weise kann die Nutzung von Zweirädern gerade auf Kurzstrecken durchaus gefördert werden.

Schließlich ist es auch möglich, bestimmten Dauernutzern eine Art Dauerkarte auszustellen, mit der eine ständige Berechtigung zur Nutzung einer Zweiradgarage verbunden ist, ohne daß die zeitabhängigen Gebühren anfallen.

Schließlich ist es durch die flexible Gestaltbarkeit des Verwaltungsverfahrens auch möglich, eine Generalkarte zu erstellen, mit der sämtliche Zweiradgaragen, beispielsweise zu Wartungszwecken, geöffnet werden können.

Die einfachste Form der Verwaltung ergibt sich, wenn jede Zweiradgarage ein einzelnes, autarkes Datenerfassungssystem mit einem Mikroprozessor und einem Speicher, z.B. einem EEPROM, zugeordnet ist, das nur die Identifizierung und die Abbuchung von der Karte sowie die Steuerung des Schlosses vornimmt.

## Patentansprüche

1. Zweiradgarage mit einem für ein oder mehrere Zweiräder allseits umschlossenen Raum, der eine Tür mit einem Schloß aufweist, durch die ein Zweirad einstell- und entnehmbar ist, **dadurch gekennzeichnet,** daß das Schloß als Kartenleseschloß für eine Magnet- oder Chipkarte ausgebildet oder mit einem derartigen Kartenleser verbunden ist, daß das Schloß mit einem Datenerfassungssystem verbunden ist und daß die Tür nur bei eingegebener Magnet- oder Chipkarte zu öffnen ist.

2. Zweiradgarage nach Anspruch 1, **dadurch gekennzeichnet,** daß dem Schloß ein eigenes Datenerfassungssystem zugeordnet ist.

3. Zweiradgarage nach Anspruch 1, **dadurch gekennzeichnet,** daß das Datenerfassungssystem den Schlössern von je zwei oder mehreren Zweiradgaragen zugeordnet ist.

4. Verfahren zur Verwaltung einer oder mehrerer Zweiradgaragen, gekennzeichnet durch folgende Schritte:
zum Einstellen eines oder mehrerer Zweiräder:
- Lesen einer Magnet- oder Chipkarte in einem der Zweiradgarage zugeordneten Schloß,
- Abgleich der auf der Karte vorgefundenen Daten mit einer Datenbank,
- Prüfen der Zugangsberechtigung,
- Öffnen des Schlosses zum Einstellen eines Zweirads,
- Feststellen des Einstellpunkts,
- Schließen des Schlosses,
- Ausgabe der Karte;
zum Entnehmen des oder der Zweiräder:
- Lesen der Magnet- oder Chipkarte,
- Prüfen der Zugangsberechtigung,
- Freigabe des Schlosses zum Entnehmen des Zweirades,
- Verschließen der leeren Zweiradgarage nach der Entnahme des Zweirads,
- Ausgabe der Karte.

5. Verfahren nach Anspruch 4, **dadurch gekennzeichnet,** daß vor der Freigabe des Schlosses zum Entnehmen des eingestellten Zweirades folgende Schritte vorgesehen sind:
- Feststellen der seit dem Einstellen vergangenen Zeit,
- Abbuchen eines dem vergangenen Zeitraum entsprechenden Betrages von einem der Karte zugeordneten Konto.

6. Verfahren nach Anspruch 5, **dadurch gekennzeichnet,** daß bei nicht ausreichender Deckung des Kontos mit der zum Einstellen verwendeten Karte und einer weiteren Karte das Schloß geöffnet wird, wobei der Restbetrag von dem der weiteren Karte zugeordneten Konto abgebucht wird.
